# EUROPEAN PATENT SPECIFICATION

(11) **EP 3 658 876 B1**
(45) Date of publication and mention of the grant of the patent: **04.01.2023**
(21) Application number: 18760024.2
(22) Date of filing: 30.07.2018
(51) Int. Cl.: G01L 3/10, G01L 3/14

(54) **TRANSDUCER DEVICE FOR A ROTARY SHAFT OF A MACHINE**
WANDLERVORRICHTUNG FÜR EINE DREHWELLE EINER MASCHINE
DISPOSITIF TRANSDUCTEUR POUR ARBRE ROTATIF DE MACHINE

(30) Priority: 28.07.2017 IT 201700086990
(43) Date of publication of application: 03.06.2020
(73) Proprietor: Bonfiglioli S.p.A., 40012 Calderara di Reno (BO) (IT)
(72) Inventor: BERLATO, Francesco, 40012 Calderara Di Reno (BO) (IT); COMINETTI, Paolo, 40012 Calderara Di Reno (BO) (IT); BIANCHINI, Claudio, 40012 Calderara Di Reno (BO) (IT)
(74) Representative: Manconi, Stefano
(86) International application number: PCT/IB2018/055682
(87) International publication number: WO 2019/021262

(56) References cited:
- US-A1- 2010 093 494

## Description

### CROSS-REFERENCE TO RELATED APPLICATIONS

This application claims priority from Italian Patent Application No. 102017000086990 filed on 28/07/2017.

### TECHNICAL FIELD

The invention relates to a transducer device for a rotary shaft of a machine and to a corresponding monitoring system comprising at least two transducer devices.

In particular, the invention finds advantageous, though not exclusive application in a mechanical speed variator comprising at least two rotary shafts coupled to one another in a kinematic manner with a predetermined reduction ratio, to which explicit reference will be made in the description below without because of this loosing in generality.

### PRIOR ART

The international patent application published with number WO 2016/142884 A1 describes a measuring system applicable to a mechanical speed variator, also known as speed reducer, to measure the instantaneous angular phase displacement between the two rotary shafts of the speed variator and to determine the instantaneous torque transmitted from a first shaft to the second shaft depending on the instantaneous angular phase displacement This measuring system comprises two position sensors, each assigned to a respective shaft of the speed variator, and an electronic control unit connected through cables to the two sensors so as to power them, read the signals generated by the position sensors and process the read signals in order to obtain the instantaneous angular phase displacement and the instantaneous torque.

The connection cables between the sensors and the control unit significantly complicate the installation of the measuring system and reduce the reliability thereof, as, for example, the speed variator can be installed in machines with other moving organs in the surroundings, which could cut the cables. Furthermore, the architecture with a control unit connected to the sensors through cables makes the measuring system scarcely flexible to possible expansions, for example in case of a significant number of speed variators to be monitored or in case there is the need to install other sensors on board the speed variator so as to measure other physical quantities which can be advantageously monitored to assess the operation conditions of the speed variator.

United States Patent Application No. 2010/0093494 A1 discloses an apparatus for measuring and monitoring the torque exerted by a cyclist during pedalling of a human-powered machine, as for example a bicycle. The apparatus includes a cartridge or the like which is adapted, in use, to be releasably retained within a hollow spindle of the machine, and one or more sensor elements for progressively sensing and generating signals, during rotation of a crankshaft of the machine, which are indicative of the angular position of the or each crank arm of the machine and/or the torque applied thereto. The apparatus includes also a wire coil element which interacts with a multi-pole ring magnet to generate an electro-motive force.

### SUBJECT-MATTER OF THE INVENTION

The object of the invention is to provide a system to measure and monitor physical quantities associated with the speed variator, which is designed to eliminate the aforementioned drawbacks and, at the same time, can be manufactured in a straightforward and low-cost manner.

According to the invention, there are provided a transducer device, a monitoring system and a machine according to the appended Claims.

### BRIEF DESCRIPTION OF THE DRAWINGS

The invention will now be described with reference to the accompanying drawings, showing a non-limiting embodiment thereof, wherein:
- figure 1 schematically shows a speed variator equipped with two transducer devices according to the invention;
- figure 2 shows more in detail an electromagnetic sensor of any one of the transducer devices of figure 1;
- figure 3 shows an example of the field lines of the magnetic field generated by part of the electromagnetic sensor of figure 2;
- figure 4 schematically shows a component of the electromagnetic sensor of figure 2; and
- figure 5 shows a block diagram of any one of the transducer devices of figure 1.

### PREFERRED EMBODIMENTS OF THE INVENTION

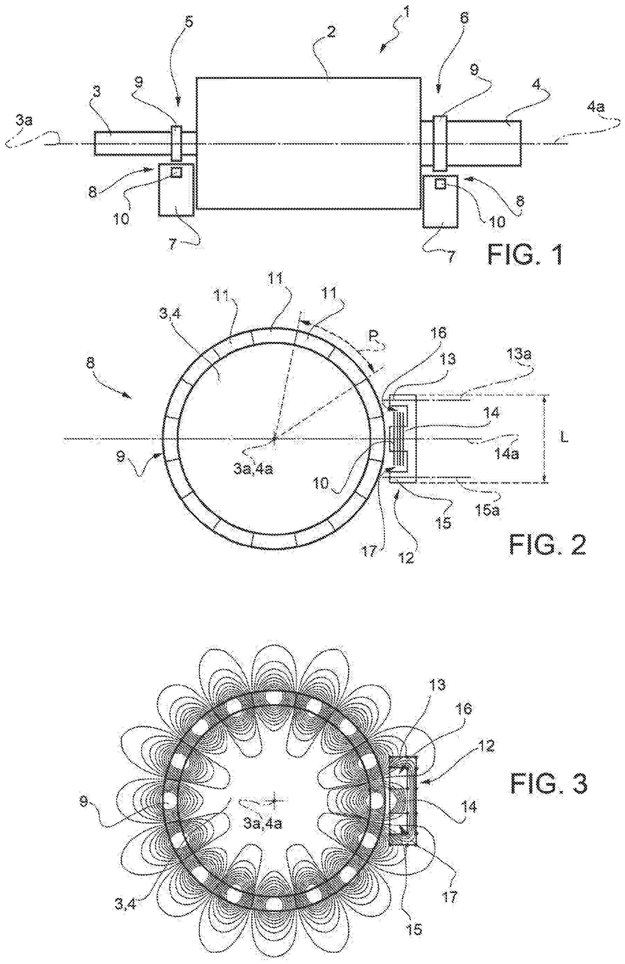

In figure 1, number 1 generically indicates, as a whole, a speed variator consisting, for example, of a speed reducer comprising a machine body 2, a first rotary shaft 3, namely a moving shaft typically rotating at a high number or revolutions (fast shaft), and a second rotary shaft 4, namely a follower shaft typically rotating at a reduced number of revolutions (slow shaft), which is coupled to the shaft 3 in a kinematic manner with a predetermined reduction ratio. The shafts 3 and 4 rotate around respective rotation axes 3a and 4a. Each shaft 3, 4 is associated with a respective transducer device 5, 6.

Each transducer device 5, 6 comprises a respective box-like body 7, which can be fixed on the machine body 2, and a respective electromagnetic position sensor 8 to detect the instantaneous angular position of the respective rotary shaft 3, 4. The position sensor 8 comprises a respective magnetic ring 9, which is couplable to the respective shaft 3, 4 in an integral and coaxial manner, and a respective pick-up coil 10, which is arranged in the box-like support body 7 so as to be in a position close to the respective magnetic ring 9.

With reference to figure 2, which shows more in detail the position sensor 8 of any one of the two transducer devices 5 and 6 in a sectional view perpendicular to the rotation axis 3a, 4a, the magnetic ring 9 comprises a succession of permanent magnets 11 arranged with alternated polarities along an outer circumference of the shaft 3, 4. In other words, the magnetic ring 9 comprises a succession of pole pairs of permanent magnets 11, each pole pair having two permanent magnets 11 arranged with opposite polarities. The pick-up coil 10 is arranged so as to be linked to the flux of the magnetic field generated by the magnetic ring 9. The position sensor 8 further comprises a ferromagnetic core 12 associated with the pick-up coil 10 so as to define a low magnetic reluctance path, which helps the flux of the magnetic field be linked.

In particular, the ferromagnetic core 12 comprises at least three portions 13, 14 and 15 facing the magnetic ring 9 and extending along three respective axes 13a, 14a and 15a lying on a plane perpendicular to the rotation axis 3a, 4a. The portion 14 preferably is in an intermediate position relative to the other two portions 13 and 15 along a direction perpendicular to the axis 14a. Basically, in the example shown in figure 2, the ferromagnetic core 12 has an E-shaped cross section. The pick-up coil 10 is coaxial to the intermediate portion 14, namely it has a winding axis that is coaxial to the axis 14a. The side portions 13 and 15 define respective low magnetic reluctance paths to enable the closing of the field lines of the magnetic field.

The permanent magnets 11 have respective magnetic axes oriented radially relative to the rotation axis 3a, 4a and the pick-up coil 10 is also oriented radially, namely its winding axis is oriented radially relative to the rotation axis 3a, 4a. This permits a maximization of the link between the magnetic field flux and the loops of the pick-up coil 10.

Advantageously, the pick-up coil 10 is wound around the intermediate portion 14 so as to be housed in two slots 16 and 17 defined between the portions 13 and 14 and between the portions 14 and 15, respectively.

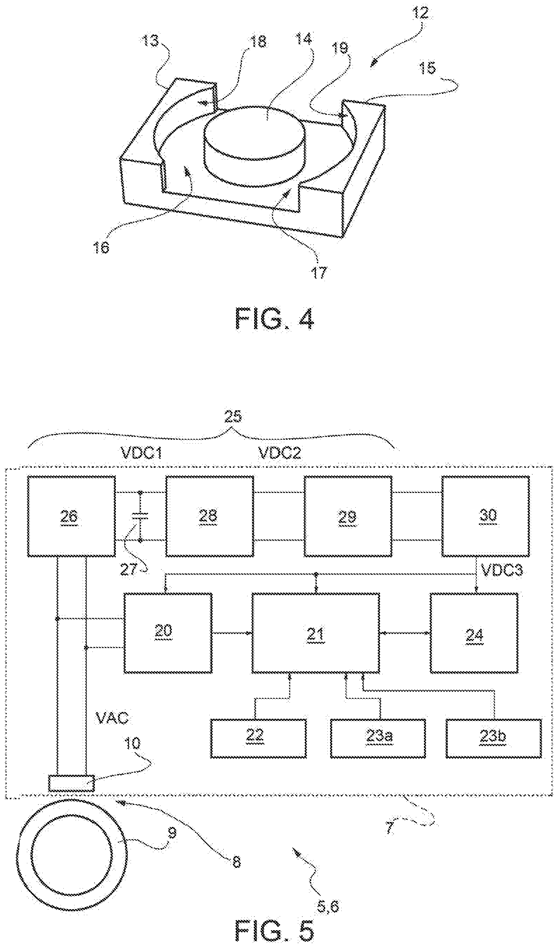

With special reference to figure 4, the intermediate portion 14 of the ferromagnetic core 12 has a circular shape according to a plan view perpendicular to the axis 14a. In particular, the intermediate portion 14 has the shape of a cylinder. The side portions 13 and 15 have respective inner side surfaces 18 and 19 which are C-shaped and face the intermediate portion 14, so that the slots 16 and 17 have a uniform width and ensure a good slot-filling coefficient.

With reference to figure 2, again, the ferromagnetic core 12 has a length L, measured perpendicularly to the rotation axis 3a, 4a, which is substantially equal to an arc of a circle covered by two contiguous permanent magnets 11, namely by a pole pair of permanent magnets 11, or to a multiple of said arc of a circle. The aforesaid arc of a circle can be called pole pitch and is indicated with P in figure 2. This sizing leads to a maximization of the magnetic field flux linked to the pick-up coil 10. Anyway, the width of the pole pitch P defines the desired resolution of the position sensor 8.

The aforesaid connection between length L and pole pitch P causes the magnetic ring coupled to a fast shaft to have a smaller number of pole pairs than a slow shaft, which typically has a greater diameter than the fast shaft.

Preferably, the ferromagnetic core 12 is made of ferrite.

Preferably, the permanent magnets 11 are made of compressed plastic-bonded neodymium.

According to a further embodiment of the invention, the permanent magnets 11 are made of ferrite.

Figure 3 shows an example of the field lines of the magnetic field generated by the magnetic ring 9. The special conformation of the ferromagnetic core 12 leads to an improvement in the closing of the field lines around the slots 16 and 17 and, hence, around the loops of the pick-up coil 10.

In use, the rotation of the shaft 3, 4 causes a substantially alternated variation of the magnetic field flux linked to the pick-up coil 10 and, consequently, an alternated current arises in the latter.

According to a further embodiment of the invention, which is not shown herein, the axes 13a-15a are oriented radially relative to the rotation axis 3a, 4a. This leads to an improvement in the closing of the field lines of the magnetic field.

According to a further embodiment of the invention, which is not shown herein, the ferromagnetic core 12 only comprises the two portions 13 and 14 or the two portions 14 and 15. This helps reduce the dimensions of the ferromagnetic core 12, but leads to a reduction in the flux of the magnetic field linked to the pick-up coil 10.

According to a further embodiment of the invention, which is not shown herein, the pick-up coil 10 is planar and is manufactured on a printed circuit board.

According to a further embodiment of the invention, which is not shown herein, the magnetic axes of the permanent magnets 11 are oriented axially, namely parallel to the rotation axis 3a, 4a, and the pick-up coil 10 is also oriented axially.

With reference to figure 5, wherein the corresponding elements are indicated with the same numbers and abbreviations of figure 2, the position sensor 8 comprises a signal conditioning stage 20 having an input that is electrically connected to the ends of the pick-up coil 10. The transducer device 5, 6 comprises a microcontroller 21, which is configured to measure the instantaneous angular position of the shaft 3, 4 based on the output signal of the signal conditioning stage 20. The signal conditioning stage 20 and the microcontroller 21 are housed inside the box-like support body 7.

Inside the box-like support body 7 there is at least one multi-axis accelerometer 22, in particular a three-axis accelerometer, to detect accelerations undergone by the box-like support body 7. Preferably, the accelerometer 22 has a digital output.

The transducer device 5, 6 comprises at least two temperature sensors 23a and 23b arranged in two respective different portions of the support container 7 so as to detect at least two temperatures, in particular a temperature of the machine body 2 and an ambient temperature, the latter being a temperature that represents as much as possible the temperature on the outside of the transducer device 5, 6. For example, the temperature sensor 23a is mounted in a portion of the support container 7 directly in contact with the machine body 2 so as to measure the temperature of the machine body 2 and the temperature sensor 23b is mounted in an outer portion of the support container 7, namely a portion that is as far as possible from the machine body 2, so as to measure the ambient temperature. Assuming that the support container 7 is mounted close to the bearings of the shaft 3,4, the temperature measured by the temperature sensor 23a substantially is the temperature of the shaft 3, 4.

The microcontroller 21 is configured to measure the physical quantities through the signals provided by the above-mentioned sensor means 8, 22, 23a, 23b, namely the instantaneous angular position, the accelerations and the temperature, and, if necessary, to calculate deriving physical quantities, for example the instantaneous rotation speed of the shaft 3, 4 depending on the relative instantaneous angular position and the root mean square of the vibrations undergone by the box-like support body 7 and, hence, by the machine body 2 depending on the measured accelerations.

Each transducer device 5, 6 further comprises a wireless communication module 24, which transmits on an ISM frequency band and is controlled by the microcontroller 21 in order to transmit data concerning the measured and/or calculated physical quantities to an outer monitoring unit. The wireless communication module 24 is also housed in the box-like support body 7.

Each transducer device 5, 6 finally comprises an energy harvesting system 25, which is electrically connected to the position sensor 8 and, in particular, to the ends of the pick-up coil 10, in parallel to the input of the conditioning stage 20. The energy harvesting system 25 makes up an electrical load for the pick-up coil 10; therefore, the alternated current that, in use, circulates in the pick-up coil 10 produces an alternated voltage at the ends of the pick-up coil 10, indicated with VAC.

The energy harvesting system 25 is housed in the box-like support body 7 and comprises, in cascade in the following order, a voltage rectifier 26 to convert the voltage VAC into a first DC voltage VDC1, a voltage levelling capacitor 27, a DC/DC voltage converter 28 to convert the voltage VDC1 into a second DC voltage VDC2, and a power storage device 29, preferably a supercapacitor, also known as supercap, charged by the voltage VDC2. In particular, the voltage rectifier 26 is passive and consists of a diode bridge.

The DC/DC voltage converter 28 adjusts the voltage VDC2 to the optimal amplitude value for charging the storage device 29. Depending on the number of loops of the pick-up coil 10, the DC/DC converter 28 is a buck passive voltage reducer or it is a voltage booster.

According to a further embodiment of the invention, the storage device 29 is a rechargeable battery. A rechargeable battery has a greater capacity than a supercapacitor, but it is larger.

The position sensor 8 must be sized so as to provide a voltage VAC having a greater amplitude than the amplitude of the voltage VDC2. The main parameters of the position sensor 8 upon which to act in order to have a VAC voltage with a sufficient amplitude are the radial size of the permanent magnets 11 and the number of loops of the pick-up coil 10.

Each transducer device 5, 6 finally comprises a linear voltage regulator 30, which is connected to the storage device 29 so as to provide a third stable DC voltage VDC3, which is suited to power the microcontroller 21 and the wireless communication module 24. For example, if the storage device 29 is a supercapacitor having a nominal voltage of 4.2 V and the microcontroller 21 has a supply voltage of 3.3 v, then the DC/DC voltage converter 28 must provide a voltage VDC2 having a mean amplitude of 4.2 V and the voltage regulator 30 must provide a stable voltage VDC3 at 3.3 V.

According to a further embodiment of the invention, which is not shown herein, the transducer device 5, 6 comprises a further box-like support body to house the signal conditioning stage 20, the microcontroller 21, the accelerometer 22, the temperature sensors 23a and 23b, the wireless communication module 24, the energy harvesting system 25 and the linear voltage regulator 30. In other words, the box-like support body 7 houses the pick-up coil 10 and the respective ferromagnetic core 12, but not the aforesaid systems and devices of the transducer device 5, 6 indicated with numbers 21-30 in figure 5. The ends of the pick-up coil 10 are connected to the input of the signal conditioning stage 20 and to the input of the energy harvesting system 25, for example through a bipolar cable coming out of the box-like support body and going into the further box-like support body 7 to be connected. This embodiment allows the transducer device 5, 6 to be more easily mounted on a small-sized speed variator 1.

With reference to figure 1, again, the pair of transducer devices 5 and 6 assigned to the shafts 3 and 4 of the speed variator 1 forms a monitoring system to monitor measurable physical quantities of the speed variator 1 and, in particular, to monitor the position and the instantaneous angular speed of the two shafts 3 and 4, the temperature of the machine body 2, the ambient temperature close to the shafts 3 and 4 as well as the root mean square of the vibrations undergone by the machine body 2.

In particular, the microcontroller 21 of a transducer device, for example the one indicated with 6, is configured to operate as a slave in order to transmit data concerning the physical quantities measured by the transducer device 6 and the microcontroller 21 of the other transducer device 5 is configured to operate as a master in order to receive the data of the transducer device 6 and process said data with the data concerning the physical quantities measured by the transducer device 5. In this way, the microcontroller 21 of the transducer device 5 operating as master can calculate other deriving physical quantities, such as for example the instantaneous angular phase displacement between the two shafts 3 and 4 and the torque transmitted by the speed variator 1 based on the instantaneous angular phase displacement and on a constant depending on the materials and the geometry of the speed variator 1.

Advantageously, the wireless communication module 24 is configured to communicate in a synchronous mesh network. In other words, the wireless communication module 24 is configured with a communication protocol for a synchronous mesh network, for example a WirelessHART^{®} protocol or a SmartMesh^{®} protocol. The protocol for a synchronous mesh network permits the elimination of non-deterministic communication latencies and, hence, allows an instantaneous angular phase displacement to be calculated in real time, despite the fact that the transducer devices 5 and 6 communicate through a radio channel, which basically is a less reliable channel than a cable channel.

Advantageously, the microcontroller 21 has an ARM architecture and has a clock ranging from 30 to 40 MHz: this solution is the best compromise between low energy consumption and processing capacity needed for the control and monitoring tasks of the microcontroller 21.

According to a further embodiment of the invention, which is not shown herein, the monitoring system comprises a monitoring unit, which comprises further wireless communication means and further processing and control means, which are configured to control the further wireless communication means in order to receive said data concerning the physical quantities measured by the two transducer devices 5 and 6 and process said data together.

More in detail, the monitoring system comprises an outer monitoring unit, which comprises its own wireless communication module, which is configured with the same communication protocol as the transducer devices 5 and 6, and a microcontroller, which is configured to control said wireless communication module in order to receive data concerning the physical quantities measured by the two transducer devices 5 and 6 and to process said data together in order to calculate deriving physical quantities, for example the instantaneous angular phase displacement between the two shafts 3 and 4 and the torque transmitted by the speed variator 1.

According to a further embodiment of the invention, which is not shown herein, the transducer device 6 operating as slave, namely the one assigned to the rotary shaft 4 (slow shaft), is not provided with the energy harvesting system 25 and with the voltage regulator 30 and the transducer device 5 operating as master, namely the one assigned to the shaft 3 (fast shaft), has its own voltage regulator 30 connected to the transducer device 6 operating as slave through a cable powering interface to electrically power the transducer device 6 with part of the power collected by the energy harvesting system 25 of the transducer device 5. This embodiment allows manufacturers to exploit the greater ability of the transducer device 5 to produce power, since it is assigned to the rotary shaft 3, which rotates faster than the rotary shaft 4.

According to a further embodiment of the invention, which is not shown herein, each one of the transducer devices 5 and 6 comprises a respective cable communication interface controlled by the respective microcontroller 21 so as to transmit, from the transducer device 6 operating as slave to the transducer device 5 operating as master, data concerning physical quantities measured by the transducer device 6 operating as slave. This embodiment allows manufacturers to overcome a possible insufficient data transmission speed due to the use of the wireless communication modules 24, in case the speed variator 1 operates at relatively high speeds. For this reason, the transducer device 6 operating as slave can avoid being provided with the wireless communication module 24, as the transducer device 5 operating as master uses its own wireless communication module 24 to transmit the data concerning the physical quantities measured by the two transducer devices 5 and 6 to the outer monitoring unit.

Owing to the above, it is evident that the monitoring system is also applicable to a speed variator consisting of a speed multiplier where the moving shaft is the slow one and the follower shaft is the fast one.

Even though the invention described above relates to a specific embodiment, it should not be considered as limited to said embodiment, for its scope of protection also includes all those variants, changes or simplifications covered by the appended claims, such as for example:
- a ferromagnetic core 12 with an intermediate portion having a rectangular shape according to a plan view perpendicular to the axis of the intermediate portion;
- an active voltage rectifier 26; and
- a monitoring system comprising one single transducer device assigned to a machine having one single rotary shaft.

## Claims

1. A transducer device for a rotary shaft of a machine, the shaft (3, 4) rotating around a rotation axis (3a, 4a), the transducer device (5, 6) comprising support means (7), which are mountable in a fixed manner on a machine body (2) of said machine (1), sensor means (8, 22, 23a, 23b), which are designed to detect one or more physical quantities and comprise electromagnetic position sensor means (8) to detect the instantaneous angular position of the shaft (3, 4), wireless communication means (24), control and processing means (21) which are configured to measure said physical quantities through said sensor means (8, 22, 23a, 23b) and to control the wireless communication means (24) in order to transmit data concerning the measured physical quantities, and energy harvesting means (25) to self-power the transducer device (5, 6); said position sensor means (8) comprising a magnetic ring (9), which is couplable to said shaft (3, 4) in an integral and coaxial manner and it comprises a succession of pairs of permanent magnets (11) arranged with alternated polarities; said energy harvesting means (25) comprising AC/DC converter means (26-28) and power storage means (29); the transducer device **being characterized in that:** said position sensor (8) comprises at least one pick-up coil (10), which is mounted on said support means (7) so as to be linked to the flux of the magnetic field generated by the magnetic ring (9), and signal conditioning means (20), which are electrically connected to the ends of said pick-up coil (10); said control and processing means (21) are configured to measure the instantaneous angular position of said shaft (3, 4) based on an output signal of said signal conditioning means (20); said AC/DC converter means (26-28) are connected to the ends of said pick-up coil (10) so as to convert an AC voltage (VAC) induced in the pick-up coil (10) by said magnetic ring (9) during the rotation of said shaft (3, 4) into a DC voltage (VDC2); and said power storage means (29), preferably comprising a supercapacitor, are connected so as to be charged by the DC voltage (VDC2).

2. Transducer device according to Claim 1, wherein said permanent magnets (11) have respective magnetic axes that are oriented radially relative to said rotation axis (3a, 4a), and said at least one pick-up coil (10) has a winding axis that is oriented radially relative to the rotation axis (3a, 4a).

3. Transducer device according to Claim 1 or 2, wherein said position sensor means (8) comprises a ferromagnetic core (12), which is associated with said pick-up coil (10) and comprises at least two portions (13-15) facing said magnetic ring (9) and extending along two respective axes (13a-15a), which lie on a plane that is perpendicular to said rotation axis (3a, 4a) and preferably are oriented radially relative to the rotation axis (3a, 4a); said at least one pick-up coil (10) being coaxial to a first one (14) of said at least two portions (13-15), the second one (13) of said at least two portions (13-15) defining a respective low magnetic reluctance path to enable the closing of the field lines of the magnetic field.

4. Transducer device according to Claim 3, wherein said at least two portions comprise at least three portions (13-15), the third one (15) of said at least three portions (13-15) defining a respective further low magnetic reluctance path to enable the closing of the field lines of the magnetic field, said first portion (14) being arranged between said second (13) and third (15) portion, preferably in an intermediate position along a direction that is perpendicular to the axis (14a) of the first portion (14).

5. Transducer device according to Claim 3 or 4, wherein said pick-up coil (10) is wound around said first portion (14), which preferably has a circular shape according to a plan view perpendicular to the axis (14a) of the first portion (14).

6. Transducer device according to anyone of the Claims from 1 to 5, wherein said position sensor means (8) comprise a ferromagnetic core (12), which is associated with said pick-up coil (10) and has a length (L) that, measured perpendicular to the said rotation axis (3a, 4a), is substantially equal to a circular arc (P) covered by two contiguous permanent magnets (11) or to a multiple of said circular arc (P).

7. Transducer device according to anyone of the Claims from 1 to 6, wherein said AC/DC converter means (26-28) comprise, in cascade in the following order, a voltage rectifier (26), preferably comprising a diode bridge, a voltage levelling capacitor (27) and a DC/DC voltage converter (28) to adjust the amplitude of the direct current voltage (VDC2) to the optimal value for charging said power storage means (29).

8. Transducer device according to anyone of the Claims from 1 to 7, wherein said sensor means (8, 22, 23) comprising at least one multi-axis accelerometer (22), which is mounted on the support means (7) so as to detect accelerations undergone by the support means (7).

9. Transducer device according to anyone of the Claims from 1 to 8, wherein said sensor means (8, 22, 23) comprising temperature sensor means (23a, 23b), which are arranged in the support means (7) so as to detect a temperature of the machine body (2) and/or a room temperature.

10. A monitoring system to monitor physical quantities for a machine (1) comprising two rotary shafts (3, 4) and, in particular, a speed variator with a predetermined reduction ratio between said two rotary shafts, the monitoring system comprising two transducer devices (5, 6), each assigned to a respective one of said rotary shafts (3, 4) and comprising sensor means (8, 22, 23a, 23b) designed to detect one or more physical quantities and comprising electromagnetic position sensor means (8) to detect the instantaneous angular position of the shaft (3, 4), communication means (24) and control and processing means (21) configured to measure said physical quantities by means of said sensor means (8, 22, 23a, 23b) and to control said communication means (24) in order to transmit data concerning the measured physical quantities; at least one of the two transducer devices (5, 6) being according to anyone of the Claims from 1 to 9.

11. Monitoring system according to Claim 10, wherein the processing and control means (21) of a first one of said two transducer devices (6) are configured to operate as slave so as to transmit data concerning the physical quantities measured by the first transducer device (6), and the control and processing means (21) of the second transducer device (5) are configured to operate as master so as to receive the data concerning the physical quantities from the first transducer device (6) and process said data with the ones concerning the physical quantities measured by the second transducer device (5).

12. Monitoring system according to Claim 11, wherein said communication means comprise a cable communication interface to transfer said data from said first transducer device (6) to said second transducer device (5).

13. Monitoring system according to Claim 11 or 12, wherein said second transducer device (5) comprises energy harvesting means (25), which are electrically connected to the respective position sensor means (8) so as to self-power the second transducer device (5); the monitoring system comprising a cable powering interface to connect said two transducer devices (5, 6) to one another so as to power the first transducer device (6) through at least part of the electrical power collected by said energy harvesting means (25).

14. Monitoring system according to Claim 13, wherein said second transducer device (5) is according to anyone of the Claims from 1 to 9.

15. A machine comprising at least one rotary shaft (3, 4) and at least one transducer device (5, 6), which is assigned to the rotary shaft (3, 4) and it is according to anyone of the Claims from 1 to 9.

## Patentansprüche

1. Wandlervorrichtung für eine rotierende Welle einer Maschine, wobei sich die Welle (3, 4) um eine Rotationsachse (3a, 4a) dreht, wobei die Wandlervorrichtung (5, 6) Folgendes aufweist: Trägermittel (7), die fest an einem Maschinenkörper (2) der Maschine (1) montierbar sind, Sensormittel (8, 22, 23a, 23b), die zum Erfassen einer oder mehrerer physikalischer Größen ausgelegt sind und elektromagnetische Positionssensormittel (8) zum Detektieren der momentanen Winkelposition der Welle (3, 4) aufweisen, drahtlose Kommunikationsmittel (24), Steuer- und Verarbeitungsmittel (21), die konfiguriert sind zum Messen der physikalischen Größen durch die Sensormittel (8, 22, 23a, 23b) und zum Steuern der drahtlosen Kommunikationsmittel (24), um Daten bezüglich der gemessenen physikalischen Größen zu übertragen, und Mittel zur Energiegewinnung (25), um die Wandlervorrichtung (5, 6) selbst mit Energie zu versorgen; wobei die Positionssensormittel (8) einen magnetischen Ring (9) aufweisen, der mit der Welle (3, 4) auf integrale und koaxiale Weise koppelbar ist und eine Folge von Paaren von Permanentmagneten (11) aufweist, die mit abwechselnden Polaritäten angeordnet sind; wobei die Energiegewinnungsmittel (25) AC/DC-Wandlermittel (26-28) und Energiespeichermittel (29) aufweisen; wobei die Wandlervorrichtung **dadurch gekennzeichnet ist, dass**: der Positionssensor (8) mindestens eine Aufnahmespule (10), die an den Trägermitteln (7) so angebracht ist, dass sie mit dem Fluss des durch den Magnetring (9) erzeugten Magnetfeldes verbunden ist, und Signalaufbereitungsmittel (20) aufweist, die elektrisch mit den Enden der Aufnahmespule (10) verbunden sind; die Steuer- und Verarbeitungsmittel (21) so konfiguriert sind zum Messer der momentanen Winkelposition der Welle (3, 4) auf der Grundlage eines Ausgangssignals der Signalaufbereitungsmittel (20); die AC/DC-Wandlermittel (26-28) mit den Enden der Aufnahmespule (10) verbunden sind, um eine Wechselspannung (VAC), die in der Aufnahmespule (10) durch den Magnetring (9) während der Drehung der Welle (3, 4) induziert wird, in eine Gleichspannung (VDC2) umzuwandeln; und die Energiespeichermittel (29), die vorzugsweise einen Superkondensator aufweisen, so angeschlossen sind, dass sie durch die Gleichspannung (VDC2) geladen werden.

2. Wandlervorrichtung nach Anspruch 1, wobei die Permanentmagnete (11) jeweils magnetische Achsen aufweisen, die radial zur Drehachse (3a, 4a) ausgerichtet sind, und die mindestens eine Aufnahmespule (10) eine Wicklungsachse aufweist, die radial zur Drehachse (3a, 4a) ausgerichtet ist.

3. Wandlervorrichtung nach Anspruch 1 oder 2, wobei die Positionssensormittel (8) einen ferromagnetischen Kern (12) aufweist, der mit der Aufnahmespule (10) assoziiert ist und mindestens zwei dem Magnetring (9) zugewandte Abschnitte (13-15) aufweist, die sich entlang zweier jeweiliger Achsen (13a-15a) erstrecken, die in einer Ebene liegen, die senkrecht zur Drehachse (3a, 4a) ist und vorzugsweise radial zur Drehachse (3a, 4a) ausgerichtet ist; wobei die mindestens eine Aufnahmespule (10) koaxial zu einem ersten (14) der mindestens zwei Abschnitte (13-15) ist, wobei der zweite (13) der mindestens zwei Abschnitte (13-15) einen jeweiligen Pfad mit geringer magnetischer Reluktanz definiert, um das Schließen der Feldlinien des Magnetfelds zu ermöglichen.

4. Wandlervorrichtung nach Anspruch 3, wobei die mindestens zwei Abschnitte mindestens drei Abschnitte (13-15) aufweisen, wobei der dritte (15) der mindestens drei Abschnitte (13-15) einen jeweiligen weiteren Pfad mit geringer magnetischer Reluktanz definiert, um das Schließen der Feldlinien des Magnetfeldes zu ermöglichen, wobei der erste Abschnitt (14) zwischen dem zweiten (13) und dem dritten (15) Abschnitt angeordnet ist, vorzugsweise in einer Zwischenposition entlang einer Richtung, die senkrecht zur Achse (14a) des ersten Abschnitts (14) ist.

5. Wandlervorrichtung nach Anspruch 3 oder 4, wobei die Aufnahmespule (10) um den ersten Abschnitt (14) gewickelt ist, der in einer Draufsicht senkrecht zur Achse (14a) des ersten Abschnitts (14) vorzugsweise eine kreisförmige Form aufweist.

6. Wandlervorrichtung nach einem der Ansprüche 1 bis 5, **dadurch gekennzeichnet, dass** die Positionssensormittel (8) einen ferromagnetischen Kern (12) aufweisen, der mit der Aufnahmespule (10) assoziiert ist und eine Länge (L) hat, die, senkrecht zur Drehachse (3a, 4a) gemessen, im Wesentlichen gleich einem Kreisbogen (P) ist, der von zwei aneinandergrenzenden Permanentmagneten (11) überstrichen wird, oder einem Vielfachen des Kreisbogens (P).

7. Wandlervorrichtung nach einem der Ansprüche 1 bis 6, wobei die AC/DC-Wandlermittel (26-28) in Kaskade in der folgenden Reihenfolge einen Spannungsgleichrichter (26), vorzugsweise mit einer Diodenbrücke, einen Spannungsausgleichskondensator (27) und einen DC/DC-Spannungswandler (28) aufweisen, um die Amplitude der Gleichspannung (VDC2) auf den optimalen Wert zum Laden der Energiespeichermittel (29) einzustellen.

8. Wandlervorrichtung nach einem der Ansprüche 1 bis 7, wobei die Sensormittel (8, 22, 23) mindestens einen Mehrachs-Beschleunigungsmesser (22) aufweisen, der an den Trägermitteln (7) angebracht ist, um Beschleunigungen zu detektieren, denen die Trägermittel (7) ausgesetzt sind.

9. Wandlervorrichtung nach einem der Ansprüche 1 bis 8, wobei die Sensormittel (8, 22, 23) Temperatursensormittel (23a, 23b) aufweisen, die in den Trägermitteln (7) angeordnet sind, um eine Temperatur des Maschinenkörpers (2) und/oder eine Raumtemperatur zu detektieren.

10. Überwachungssystem zum Überwachen physikalischer Größen für eine Maschine (1) mit zwei Drehwellen (3, 4) und insbesondere einem Geschwindigkeitsvariator mit einem vorbestimmten Untersetzungsverhältnis zwischen den beiden Drehwellen, wobei das Überwachungssystem zwei Wandlervorrichtungen (5, 6) aufweist, die jeweils mit einer der Drehwellen (3, 4) assoziiert sind und Sensormittel (8, 22, 23a, 23b) aufweisen, die dazu bestimmt sind, eine oder mehrere physikalische Größen zu detektieren, und aufweisend elektromagnetische Positionssensormittel (8) zum Detektieren der momentanen Winkelposition der Welle (3, 4), Kommunikationsmittel (24) und Steuer- und Verarbeitungsmittel (21), die konfiguriert sind zum Messen der physikalischen Größen mittels der Sensormittel (8, 22, 23a, 23b) und zum Steuern der Kommunikationsmittel (24), um Daten bezüglich der gemessenen physikalischen Größen zu übertragen; wobei mindestens eine der beiden Wandlervorrichtungen (5, 6) nach einem der Ansprüche 1 bis 9 ausgeführt ist.

11. Überwachungssystem nach Anspruch 10, wobei die Verarbeitungs- und Steuermittel (21) einer ersten der beiden Wandlervorrichtungen (6) konfiguriert sind als Slave zu arbeiten, um Daten bezüglich der von der ersten Wandlervorrichtung (6) gemessenen physikalischen Größen zu übertragen, und die Steuer- und Verarbeitungsmittel (21) der zweiten Wandlervorrichtung (5) konfiguriert sind als Master zu arbeiten, um die Daten bezüglich der physikalischen Größen von der ersten Wandlervorrichtung (6) zu empfangen und diese Daten mit denen bezüglich der von der zweiten Wandlervorrichtung (5) gemessenen physikalischen Größen zu verarbeiten.

12. Überwachungssystem nach Anspruch 11, wobei die Kommunikationsmittel eine Kabelkommunikationsschnittstelle aufweisen, um die Daten von der ersten Wandlervorrichtung (6) an die zweite Wandlervorrichtung (5) zu übertragen.

13. Überwachungssystem nach Anspruch 11 oder 12, wobei die zweite Wandlervorrichtung (5) Energiegewinnungsmittel (25) aufweist, die elektrisch mit den jeweiligen Positionssensormitteln (8) verbunden sind, um die zweite Wandlervorrichtung (5) selbst mit Energie zu versorgen; wobei das Überwachungssystem eine Kabelversorgungsschnittstelle aufweist, um die beiden Wandlervorrichtungen (5, 6) miteinander zu verbinden, um die erste Wandlervorrichtung (6) durch mindestens einen Teil der von den Energiegewinnungsmitteln (25) gesammelten elektrischen Energie zu versorgen.

14. Überwachungssystem nach Anspruch 13, wobei die zweite Wandlervorrichtung (5) eine nach einem der Ansprüche 1 bis 9 ist.

15. Maschine mit mindestens einer Drehwelle (3, 4) und mindestens einer Wandlervorrichtung (5, 6), die mit der Drehwelle (3, 4) assoziierten ist und eine nach einem der Ansprüche 1 bis 9 ist.

## Revendications

1. Dispositif transducteur pour un arbre rotatif d'une machine (1), l'arbre (3, 4) tournant autour d'un axe de rotation (3a, 4a), le dispositif transducteur (5, 6) comprenant des moyens de support (7), qui peuvent être montés d'une manière fixe sur un corps de machine (2) de ladite machine (1), des moyens de capteur (8, 22, 23a, 23b), qui sont conçus pour détecter une ou plusieurs grandeurs physiques et qui comprennent des moyens de capteur de position électromagnétique (8) pour détecter la position angulaire instantanée de l'arbre (3, 4), des moyens de communication sans fil (24), des moyens de commande et de traitement (21) qui sont configurés pour mesurer lesdites grandeurs physiques à travers lesdits moyens de capteur (8, 22, 23a, 23b) et pour commander les moyens de communication sans fil (24) afin de transmettre des données concernant les grandeurs physiques mesurées, et des moyens de récupération d'énergie (25) pour auto-alimenter le dispositif transducteur (5, 6); lesdits moyens de capteur de position (8) comprenant un anneau magnétique (9), qui peut être couplé audit arbre (3, 4) d'une manière intégrale et coaxiale et il comprend une succession de paires d'aimants permanents (11) agencés avec des polarités alternées; lesdits moyens de récupération d'énergie (25) comprenant des moyens convertisseur AC/DC (26-28) et des moyens de stockage d'énergie (29);
le dispositif transducteur (5, 6) **étant caractérisé en ce que** ledit capteur de position (8) comprend au moins une bobine de détection (10), qui est montée sur lesdits moyens de support (7) de manière à être reliée au flux du champ magnétique généré par l'anneau magnétique (9), et des moyens de conditionnement de signal (20), qui sont connectés électriquement aux extrémités de ladite bobine de détection (10) ; lesdits moyens de commande et de traitement (21) sont configurés pour mesurer la position angulaire instantanée dudit arbre (3, 4) sur la base d'un signal de sortie desdits moyens de conditionnement de signal (20); lesdits moyens convertisseur AC/DC (26-28) sont connectés aux extrémités de ladite bobine de détection (10) de manière à convertir une tension alternative (VAC) induite dans la bobine de détection (10) par ledit anneau magnétique (9) lors de la rotation dudit arbre (3, 4) en une tension continue (VDC2) ; et lesdits moyens de stockage d'énergie (29), comprenant de préférence un supercondensateur, sont connectés pour être chargés par la tension continue (VDC2).

2. Dispositif transducteur selon la revendication 1, dans lequel lesdits aimants permanents (11) ont des axes magnétiques respectifs qui sont orientés radialement par rapport audit axe de rotation (3a, 4a), et ladite au moins une bobine de détection (10) a un axe d'enroulement qui est orienté radialement par rapport à l'axe de rotation (3a, 4a).

3. Dispositif transducteur selon la revendication 1 ou 2, dans lequel lesdits moyens de capteur de position (8) comprennent un noyau ferromagnétique (12), qui est associé à ladite bobine de détection (10) et comprend au moins deux parties (13-15) faisant face audit anneau magnétique (9) et s'étendant selon deux axes respectifs (13a-15a), qui sont situés dans un plan perpendiculaire audit axe de rotation (3a, 4a) et sont de préférence orientés radialement par rapport à l'axe de rotation (3a, 4a); ladite au moins une bobine de détection (10) étant coaxiale à une première partie (14) desdites au moins deux parties (13-15), la deuxième partie (13) desdites au moins deux parties (13-15) définissant une trajectoire respective à faible réluctance magnétique pour permettre la fermeture des lignes de champ du champ magnétique.

4. Dispositif transducteur selon la revendication 3, dans lequel lesdites au moins deux parties (13-15) comprennent au moins trois parties (13-15), la troisième partie (15) desdites au moins trois parties (13-15) définissant une autre trajectoire respective à faible réluctance magnétique pour permettre la fermeture des lignes de champ du champ magnétique, ladite première partie (14) étant agencée entre lesdites deuxième partie (13) et troisième partie (15), de préférence dans une position intermédiaire selon une direction perpendiculaire à l'axe (14a) de la première partie (14).

5. Dispositif transducteur selon la revendication 3 ou 4, dans lequel ladite bobine de détection (10) est enroulée autour de ladite première partie (14), qui a de préférence une forme circulaire selon une vue en plan perpendiculaire à l'axe (14a) de la première partie (14).

6. Dispositif transducteur selon l'une quelconque des revendications 1 à 5, dans lequel lesdits moyens de capteur de position (8) comprennent un noyau ferromagnétique (12), qui est associé à ladite bobine de détection (10) et a une longueur (L) qui, mesurée perpendiculairement audit axe de rotation (3a, 4a), est sensiblement égale à un arc de cercle (P) couvert par deux aimants permanents contigus (11) ou à un multiple dudit arc de cercle (P).

7. Dispositif transducteur selon l'une quelconque des revendications de 1 à 6, dans lequel lesdits moyens de convertisseur AC/DC (26-28) comprennent, en cascade dans l'ordre suivant, un redresseur de tension (26), comprenant de préférence un pont de diodes, un condensateur de nivellement de tension (27) et un convertisseur de tension DC/DC (28) pour ajuster l'amplitude de la tension continue (VDC2) à la valeur optimale pour charger lesdits moyens de stockage d'énergie (29).

8. Dispositif transducteur selon l'une quelconque des revendications 1 à 7, dans lequel lesdits moyens de capteur (8, 22, 23) comprennent au moins un accéléromètre multiaxe (22), qui est monté sur les moyens de support (7) de manière à détecter les accélérations subies par les moyens de support (7).

9. Dispositif transducteur selon l'une quelconque des revendications 1 à 8, dans lequel lesdits moyens de capteur (8, 22, 23) comprennent des moyens de capteur de température (23a, 23b), qui sont agencés dans les moyens de support (7) de manière à détecter une température du corps de machine (2) et/ou une température ambiante.

10. Système de surveillance pour surveiller des grandeurs physiques pour une machine (1) comprenant deux arbres rotatifs (3, 4) et, en particulier, un variateur de vitesse avec un rapport de réduction prédéterminé entre lesdits deux arbres rotatifs, le système de surveillance comprenant deux dispositifs transducteurs (5, 6), chacun étant attribué à l'un desdits arbres rotatifs (3, 4) respectif et comprenant des moyens de capteur (8, 22, 23a, 23b) conçus pour détecter une ou plusieurs grandeurs physiques et comprenant des moyens de capteur de position électromagnétique (8) pour détecter la position angulaire instantanée de l'arbre (3, 4), des moyens de communication (24) et des moyens de commande et de traitement (21) configurés pour mesurer lesdites grandeurs physiques au moyen desdits moyens de capteur (8, 22, 23a, 23b) et pour commander lesdits moyens de communication (24) afin de transmettre des données concernant les grandeurs physiques mesurées; au moins l'un des deux dispositifs transducteurs (5, 6) étant selon l'une quelconque des revendications 1 à 9.

11. Système de surveillance selon la revendication 10, dans lequel les moyens de commande et de traitement (21) d'un premier desdits deux dispositifs transducteurs (6) sont configurés pour fonctionner en tant qu'esclave afin de transmettre des données concernant les grandeurs physiques mesurées par le premier dispositif transducteur (6), et les moyens de commande et de traitement (21) du deuxième dispositif transducteur (5) sont configurés pour fonctionner en tant que maître afin de recevoir les données concernant les grandeurs physiques du premier dispositif transducteur (6) et traiter lesdites données avec celles concernant les grandeurs physiques mesurées par le deuxième dispositif transducteur (5).

12. Système de surveillance selon la revendication 11, dans lequel lesdits moyens de communication comprennent une interface de communication par câble pour transférer lesdites données dudit premier dispositif transducteur (6) audit deuxième dispositif transducteur (5).

13. Système de surveillance selon la revendication 11 ou 12, dans lequel ledit deuxième dispositif transducteur (5) comprend des moyens de récupération d'énergie (25), qui sont connectés électriquement aux moyens de capteur de position respectifs (8) de manière à auto-alimenter le deuxième dispositif transducteur (5); le système de surveillance comprenant une interface d'alimentation par câble pour connecter lesdits deux dispositifs transducteurs (5, 6) l'un à l'autre de manière à alimenter le premier dispositif transducteur (6) à travers au moins une partie de l'énergie électrique collectée par lesdits moyens de récupération d'énergie (25).

14. Système de surveillance selon la revendication 13, dans lequel ledit deuxième dispositif transducteur (5) est selon l'une quelconque des revendications 1 à 9.

15. Machine comprenant au moins un arbre rotatif (3, 4) et au moins un dispositif transducteur (5, 6), qui est attribué à l'arbre rotatif (3, 4) et qui est selon l'une quelconque des revendications 1 à 9.
